# EUROPEAN PATENT APPLICATION

(11) **EP 2 080 575 A1**
(43) Date of publication of application: **22.07.2009**
(21) Application number: 07114960.3
(22) Date of filing: 24.08.2007
(51) Int. Cl.: B23C 3/34, B23B 51/00

(54) **Milling tool for providing widenings in a hole**

(71) Applicant: Unimerco A/S, 7451 Sunds (DK)
(72) Inventor: The designation of the inventor has not yet been filed
(74) Representative: Plougmann & Vingtoft A/S

(57) **Abstract**

The invention relates to a milling tool for providing a plurality of widenings in a hole at predetermined depths of the hole. The milling tool comprises a plurality of cutting elements protruding from the shaft in the radial direction, and the thickness of the shaft and the radial protrusion of the cutting elements from the shaft are adapted for providing the plurality of widenings. This is obtained by a method where a rotation of the shaft around the centre axis is performed while also performing a radial displacement of the shaft centre axis relative to a centre axis of the hole.

## Description

### FIELD OF THE INVENTION

The invention relates to a milling tool and a method for providing a plurality of widenings in a hole.

### BACKGROUND OF THE INVENTION

A hole, within the context of the present invention, means an empty space provided in a piece of material. The hole may be a blind hole or a hole being provided through a complete material thickness in the piece of material. Normally the hole has a substantially uniform inner diameter along a depth of the hole.

When providing a widening in such a hole, the hole will, along a certain depth of the hole, be provided with a widened zone where the diameter of the hole is increased. The provision of the widening, as will be described further herein, is normally along the complete inner surface of the hole in the widened zone.

GB 2 048 135 discloses a tool for milling a widening within a drill-hole. The tool comprises an interior body in which a shaft of a milling cutter is eccentrically mounted and which shaft in turn is eccentrically mounted in an exterior body. By rotating the bodies relatively to one another, the cutter may be located concentrically for insertion into or removal from a drill-hole or located eccentrically of the drill-hole to cut into the wall thereof and produce the desired widening. The milling tool has cutting elements at one position along the length of the shaft. The cutting elements provide one widening during the one and same milling operation, when rotating the milling tool at a predetermined depth of the drill-hole.

The milling tool only provides one widening at each milling process. Therefore, if more widenings are to be milled in the same hole, the time for milling the widenings increases, because of more milling operations necessary. There is a need for reducing the time spent when milling a plurality of widenings in a hole.

### SUMMARY OF THE INVENTION

It may be seen as an object of the present invention to provide an improved milling tool for providing a plurality of widenings in a hole and an improved method of providing a plurality of widenings in a hole.

According to a first aspect of the invention, a milling tool is provided for milling a plurality of widenings in a hole at predetermined depths of the hole, the milling tool comprising
- a shaft having a centre axis, a thickness in a radial direction and a length in an axial direction, and
- a plurality of cutting elements protruding from the shaft in the radial direction, and
- the thickness of the shaft and the radial protrusion of the cutting elements from the shaft being adapted for providing the plurality of widenings by performing a rotation of the shaft around the centre axis while also performing a radial displacement of the shaft centre axis relative to a centre axis of the hole, and
- wherein the plurality of cutting elements are arranged along the length of the shaft at predetermined positions being correlated for providing the plurality of widenings, and said cutting elements being arranged along one or more helixes.

Thus, a milling tool is provided which, during the one and same milling operation, provides a plurality of widenings in the hole when the milling tool is inserted to a certain depth within the hole. The plurality of widenings are provided by arranging the plurality of cutting elements along the length of the shaft at predetermined positions, the positions being correlated for providing the plurality of widenings.

A possible advantage of the first aspect of the invention is that the plurality of widenings can be provided while the milling tool remains at a given depth within the hole. The widenings are provided while substantially maintaining an alignment between a centre axis of the hole and a centre axis of the shaft and while substantially maintaining the shaft at the predetermined depth within the hole.

When the cutting elements furthermore are arranged along one or more helixes, an advantage is that the plurality of widenings can be milled with an increased efficiency, e.g. such as with less vibration and/or less cutting force and/or less cutting pressure. Still further, a possible advantage by arranging the plurality of cutting elements along one or more helixes is that the number of cutting elements that engage the one and same generatrix of the inner circumference of the hole at the same time is decreased. Possibly, there is even a probability that two or more cutting elements engaging the one and same generatrix of the hole at the same time is established so that a trailing cutting element has engaged with the generatrix of the hole before a leading cutting element has disengaged with the generatrix of the hole. Hereby, the milling forces experienced by the milling tool are reduced without leaving out the advantage of making the cutting softer and/or lighter, thereby possibly obtaining more even cutting and hereby less wear and increased precision with the milling tool.

Among other aspects, the one or more helixes may have a constant pitch if such a pitch fits one or more parameters such as a diameter of the shaft, a number and/or an axial length of the cutting elements and/or a distance between each of the cutting elements in the axial direction of the shaft.

Alternatively, the tool may use a different pitch for each helical set of cutting edges. Additionally or alternatively, the tool may have different helix angles and/or cutting directions for each set of cutting elements. In addition, the tool may have one or more variations in diameter along the length of the tool.

An overall object of a particular pitch can be to adjust the milling tool for a particular number of widenings, where the widenings have a particular shape, in a way which is mostly effective, i.e. such as that the milling causes reduced and/or more even milling forces and/or an increased precision.

Pitches of one or more helixes having the same or having differing pitch along the length of the shaft may accomplice a more effective milling of the plurality of widenings. One section along the length of the shaft may have one or more helixes with another pitch than helix(es) along another part of the shaft.

The radial displacement of the shaft centre axis relative to a centre axis of the hole may be a displacement such as an eccentric displacement of the shaft centre axis relative to the centre axis of the hole. The relative displacement may be provided by only displacing the milling tool in relation to the work-piece being milled or by only displacing the work-piece being milled and thus also displacing the centre of the hole or by displacing both the milling tool and the work-piece being milled.

The cutting elements are preferably arranged along two helixes, and possibly two cutting elements constituting a set of cutting elements are arranged at substantially the same predetermined position along the length of the shaft. Alternatively, three helixes or four helixes or more helixes are provided along which the cutting elements are arranged. The two cutting elements, alternatively the three cutting elements or four cutting elements or more cutting elements, of each set of cutting elements are arranged on each of the two helixes, and possibly the two cutting elements are arranged 180 degrees spaced apart from each other, when only two helixes are provided. If three helixes or four helixes or more helixes are provided, each set of cutting element are arranged on each of the helixes at different circumferential angles spaced apart form each other, such as 120 degrees or 90 degrees or even smaller degrees spaced apart from each other. When two cutting elements are arranged at substantially the same predetermined position along the length of the shaft, the two cutting elements will co-operate in providing one of the widenings.

When one of two helixes is a clock-wise turning helix and the other helix is a counter clock-wise turning helix, a possible advantage is that chips is possibly more effectively cut and/or removed by the cutting elements arranged along the helixes. This may especially be the case when two or more cutting elements are used in providing the same widening.

Even though various shapes and depths of widenings may be provided with the milling tool described, in an embodiment of the invention, the cutting elements are adapted for providing a plurality of annular widenings in the hole. The hole may be a blind hole or a through-going hole, and normally the hole is predrilled prior to widening it.

In accordance with a second aspect of the invention there is provided a method of providing a plurality of widenings in a hole by use of a milling tool.

In general, by writing that 'it is an advantage' by the present invention and referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from the embodiments described hereinafter with reference to the drawings.

### BRIEF DESCRIPTION OF THE DRAWINGS

The invention will hereafter be described with reference to the drawings, in which
FIG. 1 shows a milling tool prior to insertion into a hole to be widened,
FIG. 2 shows a milling tool being provided with a plurality of widenings,
FIG. 3 is a photograph of a milling tool in a side-view, and
FIG. 4 is a photograph of the milling tool in a close-up view seen from a proximate end of the milling tool.

### DETAILED DESCRIPTION OF THE INVENTION

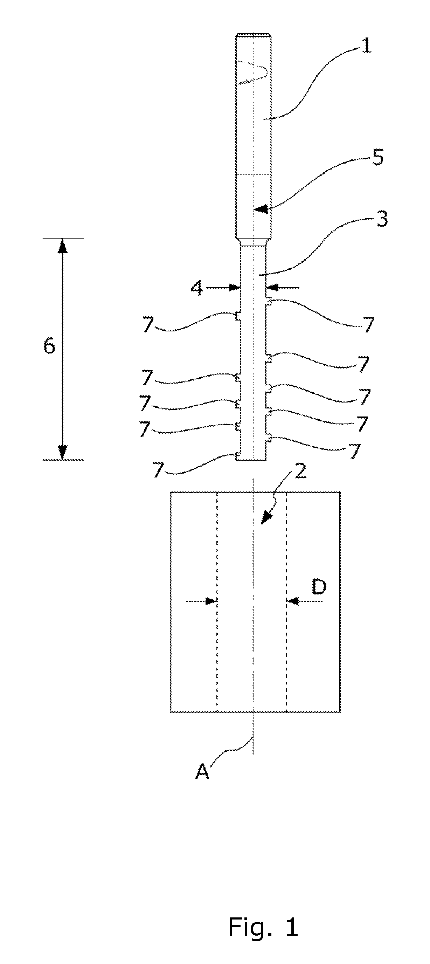

Fig. 1 illustrates an embodiment of the invention, a milling tool 1 for providing a plurality of widenings in a hole 2 at predetermined depths of the hole. The milling tool has a shaft 3 with a thickness 4 and a centre axis 5 and the shaft is provided with a plurality of cutting elements 7 protruding in a radial direction from the shaft 3.

The thickness of the shaft together with the radial protrusion of the cutting elements from the shaft are smaller than a diameter D of the hole 2, where the widenings are to be formed. The plurality of widenings are formed by performing a rotation of the shaft around the centre axis 5 while also performing a radial displacement of the shaft centre axis relative to a centre axis A of the hole.

The cutting elements 7 are arranged along the length L of the shaft at predetermined axial positions. The cutting elements are arranged along the shaft along two helixes 8.

The cutting elements 7 are arranged in sets of at least two at a given axial position along the length of the shaft on each of the two helixes 8 and are possibly arranged 180 degrees spaced apart from each other, i.e. diagonally.

Alternatively, if the helixes extend along variable helix angles, the helixes will not be spaced apart by 180 degrees, but will be spaced apart at a different angle along at least some of the extension of the helixes. Also, if three or four or more helixes are provided, the angle between the helixes will not be 180 degrees, but will be much smaller than 180 degrees, perhaps 120 degrees or 90 degrees or even a smaller angle.

In alternative embodiments, the cutting elements are arranged in sets of one or in sets of more than two at a given axial position along the length of the shaft on each of the two helixes 8. In the case where the cutting elements are arranged in sets of more than two, the cutting elements are preferably arranged angularly equidistant spaced apart from each other along the circumference of the shaft.

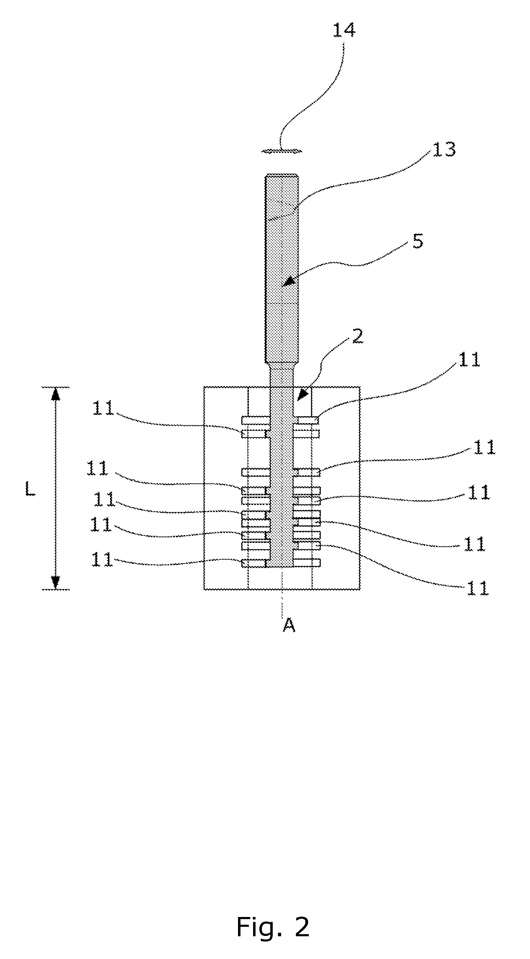

FIG. 2 shows the milling tool 1 when inserted inside the hole 2, where the widenings are to be formed, at a predetermined depth within the hole. For the sake of simplicity of the drawing, the work-piece with the hole is shown schematically in a cross sectional view through the centre axis A of the hole 2.

When the milling tool performs a rotation of the shaft around the centre axis 5, as indicated by the curved arrow 13, and at the same time a radial displacement of the shaft, as indicated by the two straight arrows 14, the plurality of widenings 11 are provided. The radial displacement of the milling tool 1 may be alternating in both of the directions at the same time indicated by the two straight arrows.

As indicated on the figure, each of the plurality of widenings 11 are situated at certain depths of the hole 2. In the shown example, the widenings 11 are grooves or annular widenings along the complete inner circumference of the hole. Alternatively, the widenings may only be provided along a limited circumferential part of the inner circumference.

In the shown example, the hole 2 is a through-going hole 2 but may also be a blind hole (not shown). The figure shows that the milling tool is held at a relative depth L of the milling tool 1 within the hole 2 and aligned parallel with the centre axis A of the hole and the centre axis 5 of the shaft 3.

The milling tool 1 according to the shown embodiment is intended for being inserted in an automated milling machine (not shown) for providing the rotation and the radial displacement of the milling tool.

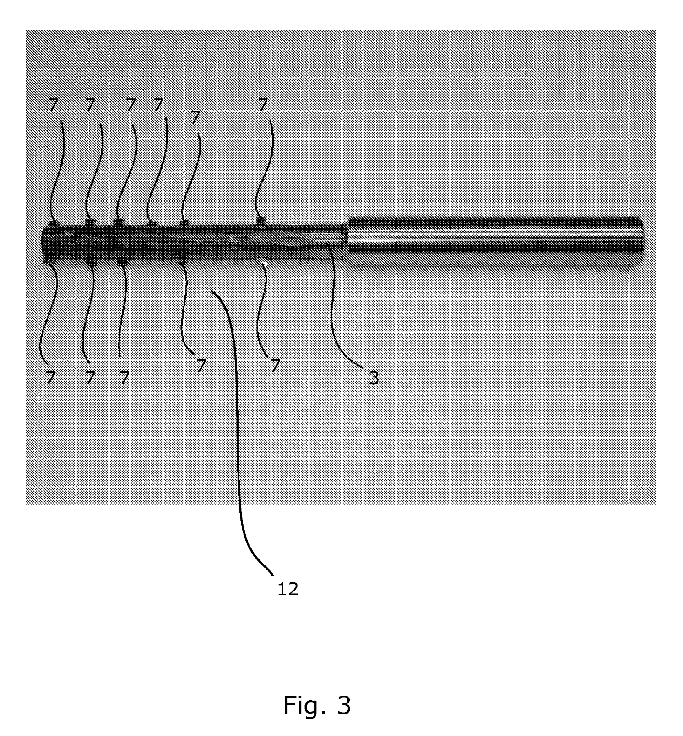

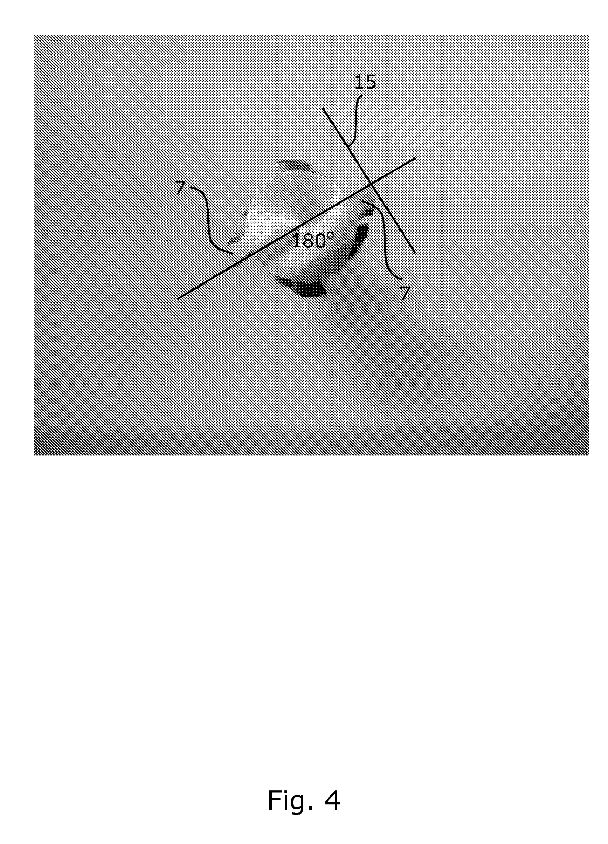

FIG. 3 and 4 are photographs of the milling tool 1 as described in FIG. 1 and 2 in a side view and a view seen from a proximate end of the milling tool, respectively. The proximate end of the milling tool is the end intended for being inserted into the hole, i.e. the end opposite a distant end at which the tool is intended for being mounted in the milling machine.

Two cutting elements, both positioned at the same position along the length of the milling tool, namely at the front end, are arranged 180 degrees spaced apart from each other. Along a given chord 20, at an outer circumference of a circle formed by the outer radial surface of the cutting elements when rotated, only one cutting element is provided along the length of the shaft.

Although the present invention has been described in connection with preferred embodiments, the invention is not intended to be limited to the specific configuration set forth herein.

In the description above and with reference to the drawings, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the configuration set forth herein, without departing significantly from the spirit and scope of this disclosure.

## Claims

**1.** Milling tool (1) for providing a plurality of widenings (11) in a hole (2) at predetermined depths of the hole (2), the milling tool comprising
a shaft (3) having a centre axis (5), a thickness (4) in a radial direction and a length (6) in an axial direction, and
a plurality of cutting elements (7) protruding from the shaft (3) in the radial direction, and
- the thickness (4) of the shaft (3) and the radial protrusion of the cutting elements (7) from the shaft (3) are adapted for providing the plurality of widenings (11) by performing a rotation of the shaft (3) around the centre axis (5) while also performing a radial displacement of the shaft centre axis (5) relative to a centre axis (A) of the hole (2), and
- wherein the plurality of cutting elements (7) are arranged along the length (6) at predetermined positions established for providing the plurality of widenings (11), and said cutting elements arranged along one or more helixes (8).

**2.** Milling tool according to claim 1, wherein the one or more helixes (8) has a constant pitch.

**3.** Milling tool according to claim 1, wherein one part of the shaft has one or more helixes with another pitch than one or more helixes along another part of the shaft.

**4.** Milling tool according to any of the preceding claims, wherein the cutting elements (7) are arranged along two helixes (8).

**5.** Milling tool according to claim 4, wherein two cutting elements (7) are arranged at substantially the same predetermined position along a length of the shaft of the milling tool, and where each of the two cutting elements is arranged on each of the two helixes (8).

**6.** Milling tool according to claim 5, wherein the two cutting elements (7) are arranged 180 degrees spaced apart from each other.

**7.** Milling tool according to any of the preceding claims 4-6, wherein one of the helixes (8) is a clock-wise turning helix and the other helix (8) is a counter clock-wise turning helix.

**8.** Milling tool according to any of the preceding claims, wherein at least two set of cutting elements are provided, and where the at least two sets of cutting elements are positioned at different positions along the length of the shaft for providing annular widenings (11).

**9.** Milling tool according to any of the preceding claims, wherein the hole (2) is blind hole or where the hole is a through-going hole (2).

**11.** A method of providing widenings (11) in a hole (2) with a milling tool (1), the widenings (11) being provided at predetermined depths of the hole (2), said milling tool (1) comprising a shaft (3) having a plurality of cutting elements (7) for providing the plurality of widenings (11), and the method comprising
- inserting at least part of the shaft (3) of the milling tool (1) inside the hole (2) at a predetermined depth (L) within the hole (2),
- performing a rotation (13) of the shaft (3) around a centre axis (5) of the shaft (3), while also performing a radial displacement of the centre axis (5)of the shaft (3) relative to a centre axis (A) of the hole (2),
- maintaining a parallel alignment between a centre axis (A) of the hole 82) and a centre axis ((5) of the shaft (3), and while substantially while also maintaining the shaft of the milling tool (1) at the predetermined depth (L) within the hole (2),
- providing a plurality of widenings during the one and same milling operation by different sets of cutting elements (7) being positioned at different positions along a length (6) of the shaft (3).

**12.** A method according to claim 11, where the method comprises the step of
- bringing one set of cutting elements (7) at one position along the length (6) of the shaft (3) in engagement with an inner circumference of the hole (2), and
- bringing another set of cutting elements (7) at another position along the length (6) of the shaft (3) in engagement with the inner circumference of the hole (2),
- said engagement with the inner circumference of the hole (2) of the first set of cutting elements (7) being established at a circumferentially leading position in relation to an engagement with the inner circumference of the hole of the other set of cutting elements (7), said other set of cutting elements (7) thereby being circumferentially trailing the first set of cutting element (7).
